# EUROPEAN PATENT SPECIFICATION

(11) **EP 2 502 653 B1**
(45) Date of publication and mention of the grant of the patent: **09.12.2020**
(21) Application number: 10831274.5
(22) Date of filing: 06.07.2010
(51) Int. Cl.: A63F 13/92, A63F 13/73, A63F 13/77

(54) **INFORMATION PROCESSING DEVICE**
INFORMATIONSVERARBEITUNGSVORRICHTUNG
DISPOSITIF DE TRAITEMENT D'INFORMATIONS

(30) Priority: 17.11.2009 JP 2009261987
(43) Date of publication of application: 26.09.2012
(73) Proprietor: Sony Interactive Entertainment Inc., Tokyo 108-8270 (JP)
(72) Inventor: SHIMIZU, Keisuke, Tokyo 108-0075 (JP); TOMINAGA, Takehiro, Tokyo 108-0075 (JP)
(74) Representative: D Young & Co LLP
(86) International application number: PCT/JP2010/004415
(87) International publication number: WO 2011/061874

(56) References cited:
- JP-A- 10 137 447
- JP-A- 2001 038 050
- JP-A- 2001 038 050
- JP-A- 2001 340 641
- JP-A- 2002 074 020
- JP-A- 2007 528 758
- JP-A- 2007 528 759
- US-A1- 2008 182 668
- '"Ninki Series no Saishinsaku ga Wii to Play Station 2 de Hatsubai Kettei 'Jikkyo Powerful Pro Yakyu NEXT' 'Jikkyo Powerful Pro Yakyu 2009"'', [Online] 10 January 2009, XP008160085 Retrieved from the Internet: <URL:http: //www.famitsu.com/game/coming/1221166_1407. html> [retrieved on 2010-07-30]
- SHINJI NAKANO: 'KONAMI, 'Pawapuro' Series Saishinsaku o 3 Gatsu 19 Nichi ni Doji Hatsubai PS2 'Jikkyo Powerful Pro Yakyu 2009', Wii 'Jikkyo Powerful Pro Yakyu NEXT'' GAME WATCH, [Online] 15 January 2009, XP008160084 Retrieved from the Internet: <URL:http://game.watch.impress.co.jp/docs/2 0090115 /pawa.htm> [retrieved on 2010-07-30]

## Description

### [TECHNICAL FIELD]

The present invention generally relates to information processing technology, and more particularly, to a technology for executing application programs, such as game programs or the like.

### [BACKGROUND ART]

In recent years a technology, referred to as emulation, for running software that is developed for certain target hardware on hardware different from the target hardware has become a focus of attention. The emulation technology virtually implements by an emulator hardware resources with which the target hardware is provided (e.g., a Central Processing Unit (CPU), memory, a disk system, or the like). When an application program that is to be executed on target hardware accesses to a hardware resource, an emulator that implements an environment for the hardware resource to be accessed inputs and/or outputs data as if it were a response from actual hardware. This allows the application program to operate.

With a conventional game console, the progress status of a game has been normally written in an external recording medium, such as a memory card or the like. In the past, a peripheral device, which is evolved from this external recording medium, has also been developed (see, for example, patent document No. 1). The peripheral device (herein after referred to as a "portable game device") is capable to receive a game program transferred from a game console and capable to execute the game by itself as well as having a memory function. Game production companies store a main game program that is executed by a game console and a game program for a game executed by a portable game device (herein after referred to as a "mini game") in one recording medium and provide users with the medium. This allows users to enjoy a mini game with a portable game device. The result of a mini game is transferred from a portable game device to a game console, and the game console forwards the progression of a main game by reflecting the result of the mini game.

### [RELATED ART LIST]

### [PATENT DOCUMENTS]

[PATENT DOCUMENT 1] US patent 6582311. A further previously proposed arrangement is disclosed in US 2008/182668

### [SUMMARY OF THE INVENTION]

### [PROBLEM TO BE SOLVED BY THE INVENTION]

An emulation device for a game generally has a hardware structure different from a conventional game device and is often provided without a slot for loading an external recording medium, such as a memory card or the like, which has been used in a conventional game device. Meanwhile, technical progress in recent years allows the capacity of recording media to increase dramatically, and an emulation device is configured to be capable of loading a high-capacity recording medium that is different in specifications from a recording medium used by a conventional game device. In an emulation device, a virtual memory card is generated in such a high-capacity recording medium or in an internal recording medium, and save data of the memory card is read into the virtual memory card.

A portable game device disclosed in the patent document 1 downloads the program of a mini game to a memory card, reads the program from the memory card, and executes the program, accordingly. Conventionally, the program of a mini game used to be stored in a recording medium, such as a CD-ROM or the like, together with the program of a main game, and a user used to buy the recording medium to play the mini game on a portable game device. In recent years, however, non-authorized game programs are sometimes available on the Internet. The operational reliability of non-authorized game programs are not guaranteed. Moreover, non-authorized game programs have a danger of causing an adverse impact on game devices. Therefore, in case of implementing a portable game device by emulation, it is preferable to provide a scheme where non-authorized mini game programs cannot be executed.

In case that a single information processing device is configured so as to be able to run a main game and a mini game, it is preferable that a user interface adopts a contrivance so as not to bring discomfort to a user when switching the main game and the mini game.

In this background, a purpose the present invention is to provide an information processing technology for executing an application program appropriately.

### [MEANS TO SOLVE THE PROBLEM]

In order to address the aforementioned issue, an information processing device is provided according to an aspect of the present invention. The information processing device includes: a storage unit operative to store an image file of an application program; and a processing unit operative to execute the application program. Usage information, which indicates an available real device or an available virtual device when the application program is executed, is added to the image file, and the processing unit refers to the usage information and presents information relating to an available device to a user.

Optional combinations of the aforementioned constituting elements, and implementations of the invention in the form of methods, apparatuses, systems, recording mediums, computer programs, or the like may also be practiced as additional modes of the present invention.

### [ADVANTAGEOUS EFFECT OF THE INVENTION]

According to the present invention, an information processing technology catering high user friendliness can be provided.

### [BRIEF DESCRIPTION OF THE DRAWINGS]

Fig. 1 shows the configuration of a communication system according to an exemplary embodiment;
Fig. 2 shows an outward structural appearance of an information processing device;
Fig. 3 shows the configuration of the information processing device that implements an emulation function;
Fig. 4 shows a list of game title icons that are downloaded to and stored in a storage unit;
Fig. 5 shows a management screen image for a virtual memory card;
Fig. 6 shows an operation screen image when a "mini game" is selected from an operation menu;
Fig. 7 shows a display screen image that is presented when a main game execution unit writes a mini game program in a save data storage unit; and
Fig. 8 shows a flowchart indicating a process for executing a mini game.

### [MODE FOR CARRYING OUT THE INVENTION]

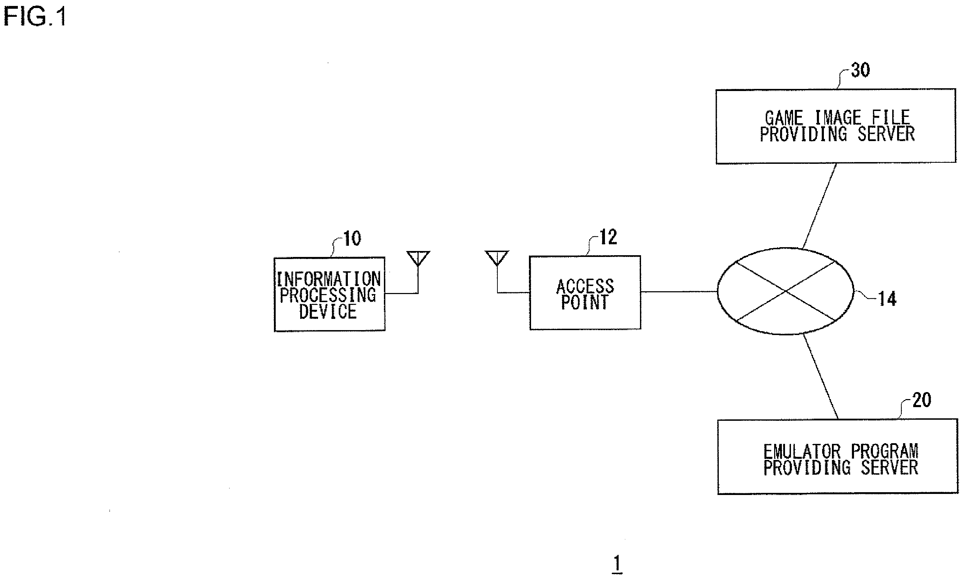

Fig. 1 shows the configuration of a communication system 1 according to an exemplary embodiment. The communication system 1 comprises an information processing device 10, an access point 12 that connects with the information processing device 10 via a wireless Local Area Network (LAN), and an emulator program providing server 20 and a game image file providing server 30 that connect with a network 14. The emulator program providing server 20 provides the information processing device 10 with an emulator program for a game. The game image file providing server 30 provides the information processing device 10 with an image file of a game program. An image file is data that is stored in one file and that is of the complete contents and the structure of a recording medium in which a game program has been stored. An image file is represented by "ISO image," which is a CD image file in ISO9660 format represents an image file, etc. A file converted from a ROM that stores a game program is sometimes referred to as a "ROM image." Associated information for an emulator is attached to an image file according to the exemplary embodiment.

The information processing device 10 is a processing device configured to have a wireless communication function. According to the exemplary embodiment, the information processing device 10 has a communication function based on a wireless LAN system. Alternatively, the information processing device 10 may have a communication function based on another wireless communication system, or may have a communication function for connecting with an external device by a cable (e.g., a USB cable or the like).

The access point 12 functions as a relay device that connects information processing devices 10 with each other via a wireless LAN, connects an information processing device 10 to another access point via a wireless LAN, and/or connects an information processing device 10 to a network 14, such as the Internet, a wired LAN, or the like. In the communication system 1, the information processing device 10 can connect with the emulator program providing server 20 and with the game image file providing server 30 via the access point 12. In case that the information processing device 10 is provided with a wired communication function, the information processing device 10 may connect with the emulator program providing server 20 and with the game image file providing server 30 via a relay device, such as a personal computer (PC) or a game console connected to the network 14, etc.

The information processing device 10 may be a portable game device. If a disk that stores a game program is loaded into a disk reader, the information processing device 10 can thereby read out and execute the game program. According to the exemplary embodiment, the information processing device 10 may not be a portable game device and may be a game console, a personal computer, or a terminal device, such as, a cellular phone, a Personal Digital Assistance (PDA), or the like. Regardless of which of the terminal devices the information processing device 10 is configured as, the information processing device 10 functions as an emulation device that is capable of executing a game program provided from the game image file providing server 30 by activating an emulator program provided from the emulator program providing server 20.

The emulator program providing server 20 provides an emulator program for running a game program dedicated to a predetermined game device on the information processing device 10. The emulator program may constitute a part of firm ware. The emulator program providing server 20 may be configured as a firmware update server that provides updated firmware. In this process, if a user instructs the information processing device 10 to update firmware, the information processing device 10 downloads updated firmware from the emulator program providing server 20. By downloading the firmware, the information processing device 10 can acquire an emulator program and can operate as an emulation device, accordingly.

The game image file providing server 30 generates an image file of a game program dedicated to a predetermined game device and provides the information processing device 10 therewith. For example, the game image file providing server 30 transmits a list of game titles that can be downloaded to the information processing device 10. A user selects a desired game title, by which the information processing device 10 downloads the image file thereof to a recording medium, such as a flash memory, or the like. The information processing device 10 activates the emulator program and reads the downloaded image file, by which the information processing device 10 can make a game progress as if the information processing device 10 is the predetermined game device.

With a conventional game console, an external recording medium, such as a memory card or the like having memory capacity of about 1 mega byte (MB), is generally used in order to write save data of a game. However, at the present day, the memory capacity of a memory card is small and a large-capacity recording medium, such as a flash memory or the like is used instead of the memory card. Therefore, the information processing device 10 is often provided without a slot for inserting a memory card that used to be utilized in a conventional game console. Meanwhile, game programs are created in accordance with the hardware structure of a conventional game device on the basis of the premise that data is read from and written to a memory card. Therefore, in order to execute a game program on the information processing device 10, it is necessary to generate an imaginary memory card (herein after also referred to as a "virtual memory card") on a recording medium. A virtual memory card is a "disk image" configured so as to have the same memory capacity as that of a conventional memory card. The information processing device 10 stores save data or the like in the disk image.

In the past, a portable game device, which is evolved from an external recording medium and which is capable of executing a mini game by itself upon receiving a game program transferred from a game console, has been developed. According to the exemplary embodiment, the information processing device 10 is configured as a portable game device. Therefore, a conventional portable game device is referred to as a "mini game device" in order to distinguish from the device 10. In a ROM that stores game software, a program that has been executed on a game console and a program that has been executed on a mini game device are stored. Hereinafter, in order to simplify an explanation, a game that has been executed on a conventional game console is referred to as a "main game," and a game that has been executed on a mini game device is referred to as a "mini game." A user downloads the program of a mini game to a mini game device by inserting a mini game device in a slot of a game console. The user removes the mini game device from the slot, and the mini game device can execute the mini game by itself, accordingly.

In the communication system 1 according to the exemplary embodiment, the emulator program providing server 20 provides the information processing device 10 with an emulator program for a conventional game console and with an emulator program for a mini game device. The information processing device 10 can operate as a conventional game console or as a mini game device by activating the provided emulator program. Hereinafter, in order to simplify an explanation, an emulator program for a game console is referred to as a "first emulator program," and an emulator program for a mini game device is referred to as a "second emulator program." The first emulator provides an execution environment of a game console, and the second emulator provides an execution environment of a mini game device. These emulator programs are transmitted via the network 14 in accordance with a download request issued by the information processing device 10.

The game image file providing server 30 provides the information processing device 10 with an image file of game software including the program of a main game and the program of a mini game. As described above, an image file refers to a file converted from a ROM that stores a program. The program of a mini game may be converted to a file separately from the program of a main game. Alternatively, the program of a mini game may be built in the program of a main game and converted to a file. In any case, an image file is formed in accordance with the contents and the structure of a conventional game ROM.

The information processing device 10 according to the exemplary embodiment first activates the first emulator program and executes a main game. If there is an instruction from a user to execute a mini game while executing the main game, the information processing device 10 activates the second emulator program and executes a mini game. When executing a mini game, the information processing device 10 does not allow all of the mini games that the device 10 retains to be executable, but executes only a mini game associated with the main game.

A conventional mini game device can download a plurality of mini game programs from a game console and a user can run any mini game. However, in recent years, a number of non-authorized game programs exist on the Internet and it is easy to acquire such game programs. Therefore, even a user who does not own the program of a main game can acquire only the program of a mini game. However, it is not preferable to provide a user who does not appropriately purchase game software with an environment where a mini game can be executed. Therefore, the information processing device 10 according to the exemplary embodiment imposes a predetermined constraint on the execution of a mini game.

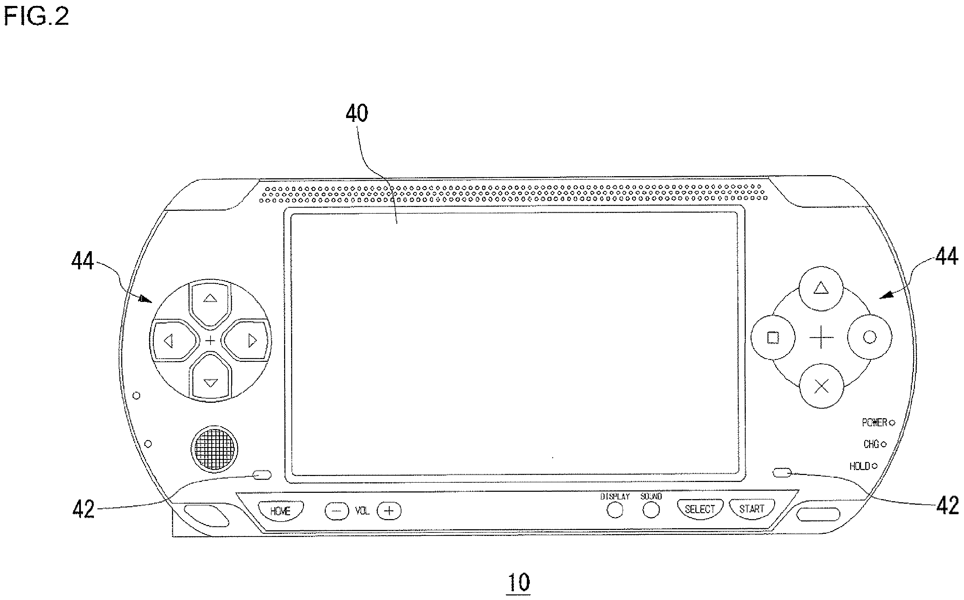

Fig. 2 shows an outward structural appearance of the information processing device 10. The information processing device 10 comprises a display unit 40 for displaying a game image, a graphical user interface, or the like, an audio output unit 42 that outputs audio data, and a controller unit 44 that receives an operation input by a user. The display unit 40 may be a liquid crystal display. The audio output unit 42 may be a speaker. The controller unit 44 includes directional keys and four types of buttons (a circle button, a cross button, a square button, and a triangle button) provided on the surface of a housing and also includes a button provided on the side surface of the housing.

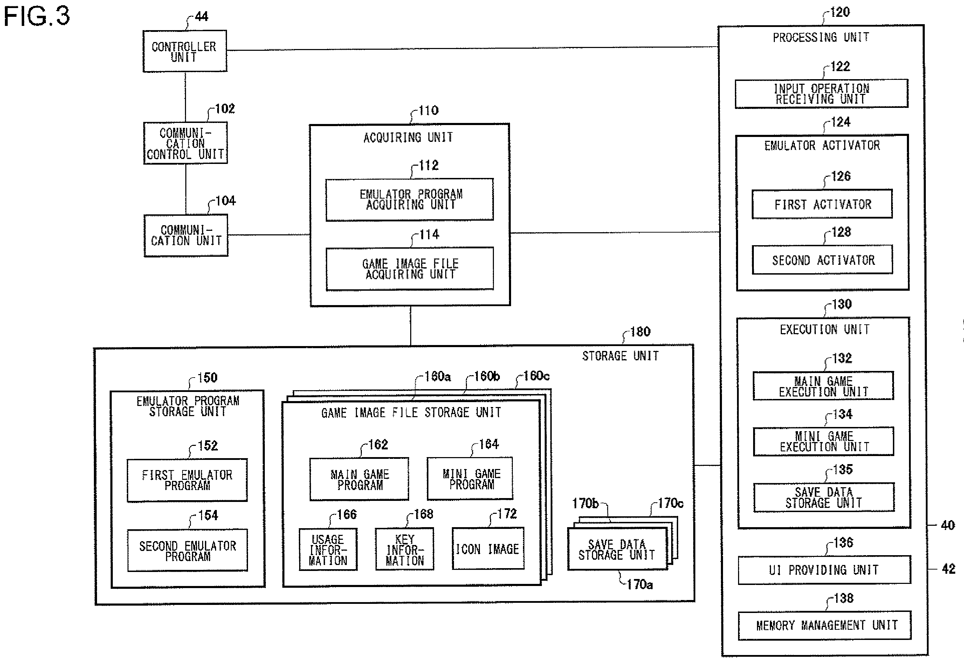

Fig. 3 shows the configuration of the information processing device 10 that implements an emulation function. The information processing device 10 comprises the display unit 40, the audio output unit 42, and the controller unit 44, and further comprises a communication control unit 102, a communication unit 104, an acquiring unit 110, a processing unit 120, and a storage unit 180. The acquiring unit 110 is configured so as to comprise an emulator program acquiring unit 112 and a game image file acquiring unit 114, and acquires downloaded data from the communication unit 104. The processing unit 120 is configured so as to comprise an input operation receiving unit 122, an emulator activator 124, an execution unit 130, a user interface (UI) providing unit 136, and a memory management unit 138. The processing unit 120 executes the emulation function in the information processing device 10. The emulator activator 124 is provided with a first activator 126 that activates the first emulator program and a second activator 128 that activates the second emulator program. The execution unit 130 is provided with a main game execution unit 132 that executes the program of a main game, a mini game execution unit 134 that executes the program of a mini game, and a save data storage unit 135. The save data storage unit 135 is a storage region for reading out data stored in a save data storage unit 170 included in the storage unit 180 and is configured as a Random Access Memory (RAM).

The storage unit 180 is a recording medium such as a flash memory or the like, and is provided with an emulator program storage unit 150, game image file storage units 160a, 160b, and 160c (herein after referred to as a "game image file storage unit 160" when referred collectively), and save data storage units 170a, 170b, and 170c (herein after referred to as a "save data storage unit 170" when referred collectively). The emulator program storage unit 150, the game image file storage unit 160, and the save data storage unit 170 may be formed in the same storage unit 180, or may be formed in different storage units.

The emulation function of the information processing device 10 is implemented by a CPU, memory, a program loaded into the memory, or the like. Fig. 3 depicts functional blocks implemented by cooperation of these components. Although the information processing device 10 functions as an emulation device by downloading an emulator program according to the exemplary embodiment, an emulator program may be embedded in the information processing device 10. It will be obvious to those skilled in the art that the functional blocks may be implemented in a variety of ways, by hardware only, software only, or a combination thereof.

Upon receiving from the controller unit 44 a request to download an emulator program, the communication control unit 102 connects the communication unit 104 to the emulator program providing server 20. The communication unit 104 downloads from the emulator program providing server 20 a first emulator program for a conventional game console and a second emulator program for a mini game device, and provides the emulator program acquiring unit 112 therewith. The emulator program acquiring unit 112 stores the acquired first emulator program 152 and the second emulator program 154 in the emulator program storage unit 150.

The communication control unit 102 receives from the controller unit 44 a request to connect to the game image file providing server 30, and connects the communication unit 104 to the game image file providing server 30, accordingly. The game image file providing server 30 distributes a list of game titles that can be downloaded. A user selects a desired game title from a list displayed on the display unit 40, by which a download request for a game image file is generated. The communication unit 104 downloads the game image file from the game image file providing server 30, and provides the game image file acquiring unit 114 therewith. The game image file acquiring unit 114 stores the acquired game image file in the game image file storage unit 160.

According to the exemplary embodiment, a game image file includes a main game program 162 and a mini game program 164. Usage information 166, key information 168, and an icon image 172 are attached to the game image file as associated information. The main game program 162 is a program that used to be executed in a conventional game console, and the mini game program 164 is a program that used to be executed in a conventional mini game device. As described above, the mini game program 164 may be embedded in the main game program 162. However, in order to facilitate the understanding thereof, those programs are shown as separate programs in Fig. 3 according to the exemplary embodiment.

The main game program 162 and the mini game program 164 is a ROM image, which is a file converted from a ROM storing a game program that used to be executed in a conventional game console. A game image file according to the exemplary embodiment has a format where at least the usage information 166, the key information 168, and the icon image 172 are attached to the ROM image.

The usage information 166 indicates an available real device or an available virtual device when the main game program 162 is executed. The real or virtual device may be a device that operates as a peripheral device of a conventional game console while the device 10 executes the first emulator program 152 and operates as the conventional game console. The usage information 166 according to the exemplary embodiment specifies that a virtual mini game device is available, i.e., the information 166 indicates that a mini game can be executed in the information processing device 10 by activating the second emulator program 154. The usage information 166 may be a flag value that indicates whether or not to allow the use, and may be defined as "1" in case that a mini game can be executed and may be defined as "0" in case that a mini game cannot be executed. The game image file may be configured so that, only in case that a main game is compatible with a mini game, the usage information 166 indicating that information is attached, and the game image file may be configured so as not to include the usage information 166 in case that the main game is not compatible with a mini game.

The usage information 166 may be information specifying that one or more peripheral devices other than the mini game device are available. For example, in case that a joystick can be used in the main game, the usage information 166 may specify that a joystick is available. In case that a keyboard can be used in the main game, the usage information 166 may specify that a keyboard is available. Assuming a situation where a user have to select a peripheral device to use by himself/herself when executing a main game, there may be a chance that the user selects an unavailable peripheral device by mistake. By contrast, if an available peripheral device is specified beforehand by the usage information 166, the user cannot select unavailable peripheral device in the first place, by allowing the information processing device 10 to provide the user only with information on the available peripheral device as a selectable device. This saves time and trouble when selecting a peripheral device to use.

The key information 168 is information for encrypting or decrypting a program for a peripheral device. The key information 168 may include an encryption key for encrypting a program and a decryption key for decrypting an encrypted program, or may include a common key for encrypting and decrypting. The key information 168 is information specific to game software, and different keys are defined for respective game titles.

The icon image 172 is image data to be presented in order to allow a user to visually recognize the existence of the mini game program 164.

The game image file acquiring unit 114 stores an acquired game image file separately for each game software, i.e. for each game title, in the storage unit 180. Consequently, the number of game image file storage units 160 generated in the storage unit 180 is the number of pieces of game software that have been downloaded.

When the main game execution unit 132 activates the main game program 162 on an environment provided by the first emulator, if it is the first activation, the memory management unit 138 generates the save data storage unit 135 on a RAM. The save data storage unit 135 is a disk image of a memory card, has a storage area of about 1 mega byte, and is divided into a predetermined number of (e.g., fifteen) blocks. If it is not the first activation, the memory management unit 138 executes a process of reading data from the save data storage unit 170 to the RAM because the save data storage unit 170 was already generated at the time of first activation as will be described later.

When activating the main game program 162 for the first time, a user manipulates the controller unit 44 so as to instruct to execute a mini game, and the mini game program 164 is read out from the game image file storage unit 160 to the save data storage unit 135, accordingly. The user selects one of the icon images 172 of the mini game displayed on the display unit 40, by which the user can play the mini game on an execution environment provided by the second emulator. If the mini game is completed, the result of the mini game is reflected to the progress of the main game. If the user saves the main game and ends the game, save data is written into the save data storage unit 135.

If the main game is completed, the memory management unit 138 writes the data that is stored in the save data storage unit 135 into the storage unit 180 as the save data storage unit 170. In this process, the memory management unit 138 reads the key information 168 from the game image file storage unit 160 and encrypts the mini game program by using the key information 168. The encrypted mini game program 164 can be decrypted only by using the corresponding key information 168. The mini game program 164 may be encrypted in advance and transmitted in an encrypted state, and may be acquired by the game image file acquiring unit 114. In this process, the key information 168 is merely required to have a role of a decryption key.

The memory management unit 138 encrypts the mini game program 164 by using the key information 168. However, the memory management unit 138 does not encrypt the icon image 172 for allowing a user to visually recognize the existence of the mini game program 164. Therefore, it is not necessary to decrypt the icon image 172 later when the icon image 172 is going to be presented to a user. Further, the memory management unit 138 does not encrypt the save data of a game. This allows the save data to be utilizable also in other information processing devices different from the information processing device 10 without the need for decryption. As described above, the memory management unit 138 stores the mini game program 164 in an encrypted state in the save data storage unit 170 and stores the save data without decryption in the save data storage unit 170. Although the icon image 172 may be stored in the save data storage unit 170, it is not always necessary to store the icon image 172 in the save data storage unit 170 because the icon image 172 is already retained in the game image file storage unit 160.

The save data storage unit 170 is generated for each game title. Among a plurality of save data storage units 170, the main game execution unit 132 accesses a save data storage unit 170 that corresponds to the game title of a main game program to be executed. A user can manipulate the controller unit 44 so as to change a save data storage unit 170 that the main game execution unit 132 is to access.

The save data storage unit 170 is formed in the storage unit 180, for example by setting its title ID as a directory name, and is configured as a disk image of a memory card in a similar manner with that of the save data storage unit 135. A point of difference from that of the save data storage unit 135 is that the mini game program 164 is encrypted as described above.

As described above, one game image file storage unit 160 and one save data storage unit 170 are respectively provided for each piece of game software of the same game title. Although an example has been presented wherein the directory name of the save data storage unit 170 is set as the character string of a title ID, the directory name of the game image file storage unit 160 may also be set in a similar manner as a character string including a title ID. These examples do not limit the directory names. Any directory name with which the first emulator can grasp respective storage positions can be adopted.

As described above, the emulator program storage unit 150, the game image file storage unit 160, and the save data storage unit 170 are formed in the storage unit 180, whereby the emulator function of the information processing device 10 according to the exemplary embodiment is implemented.

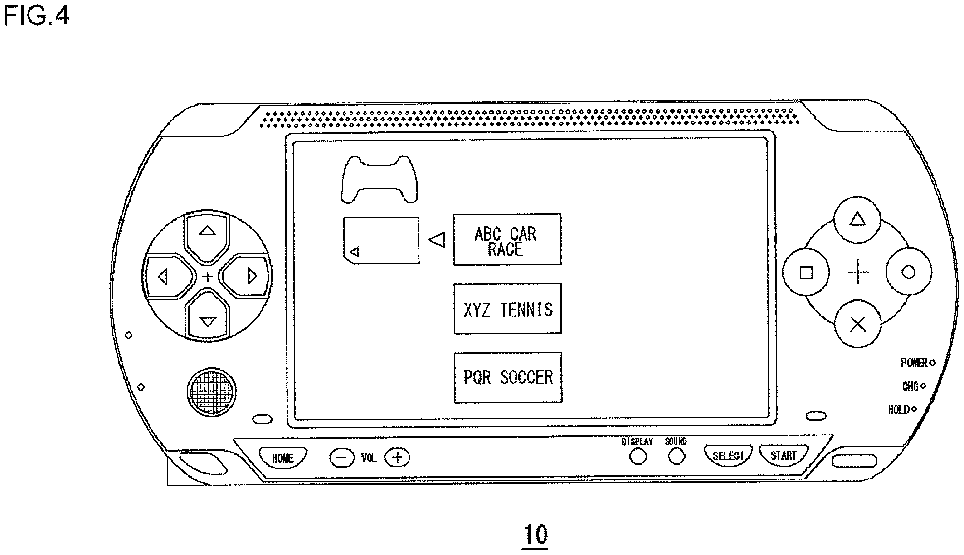

Fig. 4 shows a list of game title icons that are downloaded to and stored in the storage unit 180. The number of game title icons displayed is the number of game image files stored in the game image file storage unit 160. A user operates the controller unit 44 so that game title icons being displayed are scrolled and operates so as to select a game title icon that the user would like to run. In this example, it is assumed that the user selects "ABC car race."

In the processing unit 120, if the input operation receiving unit 122 receives an operation for selecting a game title icon from the controller unit 44, the input operation receiving unit 122 provides an instruction to execute the first emulator program 152 to the first activator 126. The first activator 126 reads out the first emulator program 152 from the emulator program storage unit 150, and activates the program 152. This allows the information processing device 10 to operate as an emulation device. After the emulation function is started up, the main game execution unit 132 reads out the main game program 162 from the game image file storage unit 160 that stores the image file of the "ABC car race," and executes the program 162 on an environment provided by the emulation function.

During the execution of the main game program 162, a user sometimes would like to use data retained in the virtual memory card. A typical case thereof is that a user uses save data retained in the save data storage unit 170 so as to play the continuation of a game that the user once played. The user can utilize the save data of the save data storage unit 170 associated with the "ABC car race," or in case that the save data is retained in a save data storage unit 170 associated with another game, the user can utilize the save data of the save data storage unit 170. According to the exemplary embodiment, the user uses a mini game program retained in a virtual memory card in case that the user plays a mini game associated with a main game that is being executed. The user gives a predetermined operation via the controller unit 44, and the UI providing unit 136 generates a management screen image for a virtual memory card and presents the screen image on the display unit 40, accordingly.

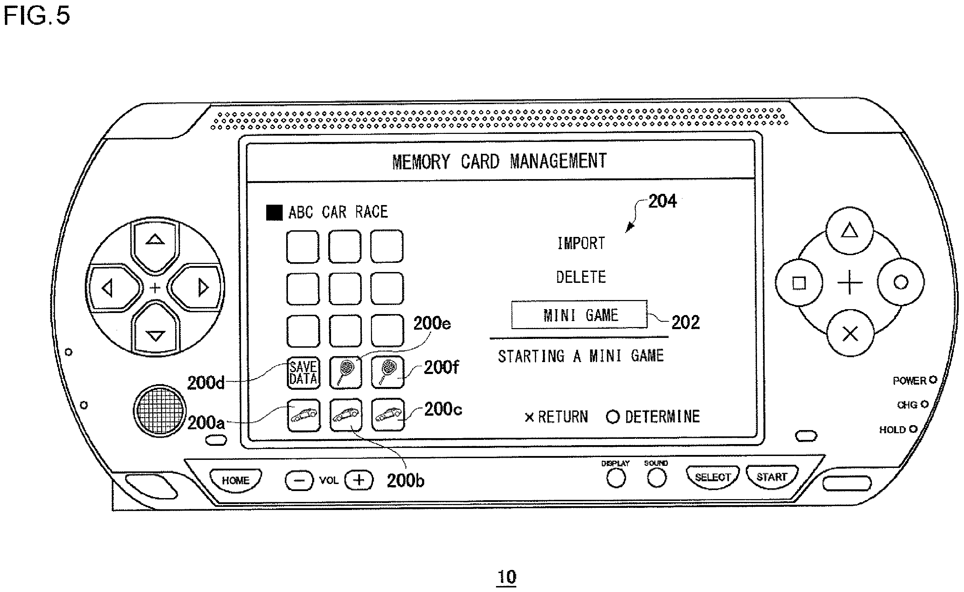

Fig. 5 shows the management screen image for the virtual memory card. During the execution of the "ABC car race," the memory management unit 138 reads out data that is required to generate the management screen image from the save data storage unit 170 and the game image file storage unit 160 that are formed for the "ABC car race." First, the memory management unit 138 specifies a corresponding save data storage unit 170 and a game image file storage unit 160 by using the title ID of the "ABC car race" that is being executed. The memory management unit 138 reads out to a RAM data retained in the save data storage unit 170, and reads out the usage information 166 and the key information 168 retained in the game image file storage unit 160. At this time point, the mini game program retained in the save data storage unit 170 is in an encrypted state. On the other hand, the save data retained in the save data storage unit 170 and the icon image 172 retained in the game image file storage unit 160 are not encrypted, respectively.

As described above, the save data storage unit 170 is provided with a storage area divided into fifteen blocks. The icon images 200 of retained mini game programs and save data are displayed on the left side area of the display unit 40. In the example shown in Fig. 5, data is retained in six blocks and six icon images 200a-200f are displayed. Among them, the icon images 200a-200c specify the existence of the mini game program of the ABC car race. The icon image 200d specifies the existence of the save data of the ABC car race. The icon images 200e-200f specify the existence of the mini game program of XYZ tennis. The memory management unit 138 refers to the contents stored in the save data storage unit 170. Upon verifying that the mini game program of the XYZ tennis is included as well as the mini game program of the ABC car race, the memory management unit 138 also accesses the game image file storage unit 160 of the XYZ tennis and reads out the icon image 172 of the XYZ tennis. As described above, the icon images 172 included in the game image file storage unit 160 are not encrypted. Thus, upon receiving the icon images 172 from the memory management unit 138, the UI providing unit 136 can display the images on the display unit 40 without a decryption process. Although an example is shown wherein a mini game program is stored across a plurality of blocks, a mini game program may be stored only in one block.

The memory management unit 138 specifies a mini game program from among data retained in the save data storage unit 170 and applies a decryption process to the mini game program. More specifically, the memory management unit 138 specifies the title ID of the main game program 162 that is being executed and reads out the key information 168 from the game image file storage unit 160 of the specified title ID. The memory management unit 138 decrypts the encrypted mini game program by using the read key information 168. In this process, because the read key information 168 corresponds to the ABC car race, the memory management unit 138 can decrypt the mini game program of the ABC car race. Thereby, this mini game program is in a format executable by the mini game execution unit 134. Meanwhile, since the read key information 168 does not correspond to the XYZ tennis, the memory management unit 138 cannot decrypt the mini game program of the XYZ tennis. Therefore, the first emulator does not recognize the encrypted mini game program of the XYZ tennis as a game program. Thus, a user cannot select the icon image 200e or the icon image 200f.

An operation menu 204 is displayed on the right side area of the display unit 40. A user can select the operation menu 204 by operating the controller unit 44 so as to move a selection box 202. In the operation menu 204, an item "import" is a command that instructs to copy data from another virtual memory card (save data storage unit 170). The management screen image of the virtual memory card shown in Fig. 5 presents contents stored for the ABC car race. Thus the mini game program for the XYZ tennis does not exist in the first place. However, the user can copy data from another virtual memory card by selecting the item "import." In the example shown in the figures, a status is shown where the mini game program of the XYZ tennis has been copied. An item "delete" is a command that instructs to delete data, whereby a user can delete unnecessary data.

An item "mini game" is a command for executing a mini game. The UI providing unit 136 refers to the usage information 166 of the ABC car race and adds the item "mini game" to the operation menu 204. More specifically, the UI providing unit 136 determines whether the ABC car race is compatible with a mini game by the usage information 166, and adds the item "mini game" to the operation menu 204 only in case that the ABC car race is compatible with the mini game. Therefore, in case that the usage information 166 does not exist, or in case that the usage information 166 indicates that the main game is not compatible with a mini game, the UI providing unit 136 does not present the operation menu of "mini game" to the user, thus the user can not run a mini game.

In this manner, the UI providing unit 136 refers to the usage information 166 and presents information relating to an available peripheral device to a user. More specifically, the memory management unit 138 specifies a game image file storage unit 160 on the basis of identification information (title ID) that identifies an application program that is to be executed by the main game execution unit 132, reads out the usage information 166 associated with the application program to be executed, and passes the information 166 to the UI providing unit 136. The UI providing unit 136 refers to the read usage information 166 and presents information relating to an available peripheral device so that the user can select the device. According to the exemplary embodiment, the UI providing unit 136 specifies that a virtual mini game device is available on the basis of the usage information 166, and presents a selection item "mini game" as shown in Fig. 5.

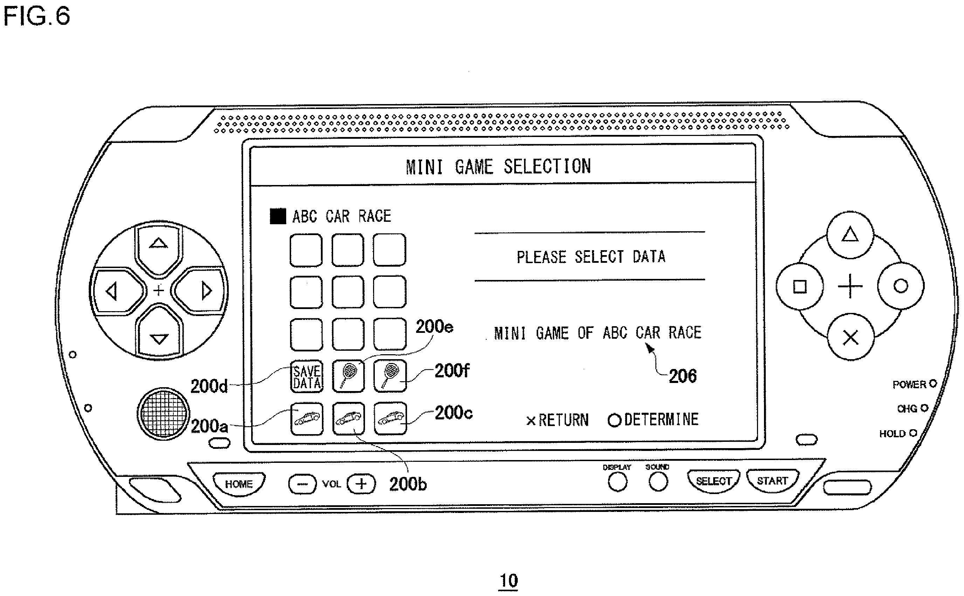

Fig. 6 shows an operation screen image when the "mini game" is selected on the operation menu 204. The user operates the controller unit 44 so as to select an icon image 200 and to specify a mini game to be run. Since the icon images 200a-200c represent one mini game program, the mini game of the ABC car race is selected regardless of which of the icon images 200a-200c is selected. The name of the selected game is displayed in a data name display field 206. If the user pushes a determination button in this status, the second activator 128 activates the second emulator program 154, and the mini game execution unit 134 reads the decrypted mini game program, and executes the mini game.

A user can play the mini game of the ABC car race while playing the main game of the ABC car race. However, a user cannot play the mini game of other game title. This allows only a user who has legitimately purchased the game program, that is, a user who owns the key information 168 associated with the main game that is being executed, to play the mini game.

After the second activator 128 activates the second emulator program 154 and the mini game execution unit 134 reads the mini game program and executes the mini game, the first activator 126 stops the execution of the first emulator program 152. The emulator activator 124 decreases the CPU load by operating only the second emulator so as to realize the efficient use of hardware resources. On the other hand, the first emulator (game console) and the second emulator (mini game device) are also required to operate in a coordinated manner in the information processing device 10 according to the exemplary embodiment.

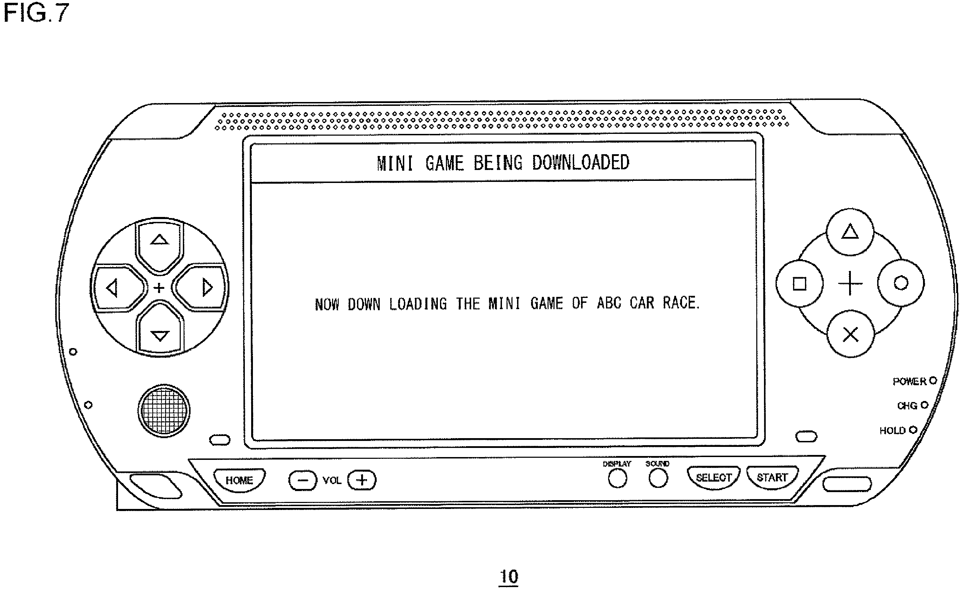

Fig. 7 shows a display screen image that is presented when the main game execution unit 132 writes a mini game program in the save data storage unit 135. For example, the first emulator and the second emulator operate in a coordinated manner in case that the main game execution unit 132 sends data to the mini game execution unit 134, and the mini game execution unit 134 executes a process by using the data and provides the execution result to the main game execution unit 132. The display screen image shown in Fig. 7 is generated by the first emulator. More specifically, the main game execution unit 132 generates this display screen image. By allowing the first emulator, except when a mini game is executed, to generate a display screen image to be presented to a user, switching from the main game to the mini game and from the mini game to the main game can be made without bringing discomfort to a user. If the "mini game" is selected on the management screen image shown in Fig. 5, the main game execution unit 132 stops the execution of the main game and the mini game execution unit 134 starts the execution of the mini game. Subsequently, the second activator 128 issues an instruction to stop the execution to the first activator 126 and the first activator 126 stops the first emulator. The reason to stop the first emulator is to recover promptly after the completion of the second emulator.

After having played the mini game, the user generates an instruction to complete the mini game by manipulating a predetermined button. The second emulator monitors the execution status of the mini game at predetermined time intervals. Upon detecting the instruction to complete, the second emulator generates an instruction to start the execution (recovery) of the first emulator. The start and the completion of the mini game is detected in the manner described below.

The second emulator describes the number of a program that is being executed at a predetermined area (herein after referred to as a "number specifying area") in memory. The number of a program may be a number that specifies a storage area of a virtual memory card. A virtual memory card according to the exemplary embodiment is divided into fifteen areas, and each area is given one of the numbers from 1 to 15. In case the mini game is selected by the user on the operation screen image shown in Fig. 6 and the mini game is executed by the mini game execution unit 134, the program number thereof is written into the number specifying area. Referring to Fig. 6, it is assumed that one of the numbers from 1 to 3 is given to the storage areas corresponding to the icon images 200a-200c, respectively. During a period after the second emulator program is activated and before the mini game is executed, the number 0 is written.

If the number in a number specifying area is 0, the second emulator detects that the mini game has not been executed yet. Upon activating the mini game program, the mini game execution unit 134 writes one of the numbers from 1 to 3 in the number specifying area. The second emulator refers to the contents stored in a block in the save data storage unit 135 on the basis of the written number, by which the second emulator recognizes that the mini game of the ABC car race is executed and issues an instruction to stop the execution to the first emulator.

Meanwhile, in case that the instruction to complete the mini game is input by the user, the mini game execution unit 134 writes 0 in the number specifying area, and completes the mini game. Upon detecting that the number in the number specifying area changes to 0, the second emulator determines that the mini game is completed and generates an instruction to start the execution of the first emulator. This allows the first activator 126 to execute the first emulator program 152. In this process, the UI providing unit 136 generates the operation screen image shown in Fig. 6 and presents the screen image to the user. The second emulator returns necessary information, such as the result of the game or the like, to the first emulator in response to a request issued by the first emulator. Subsequently, the second activator 128 stops the second emulator.

As described above, while the first emulator and the second emulator operate in a coordinated manner, games can be switched smoothly by allowing the UI providing unit 136 by the first emulator to generate a user interface screen image.

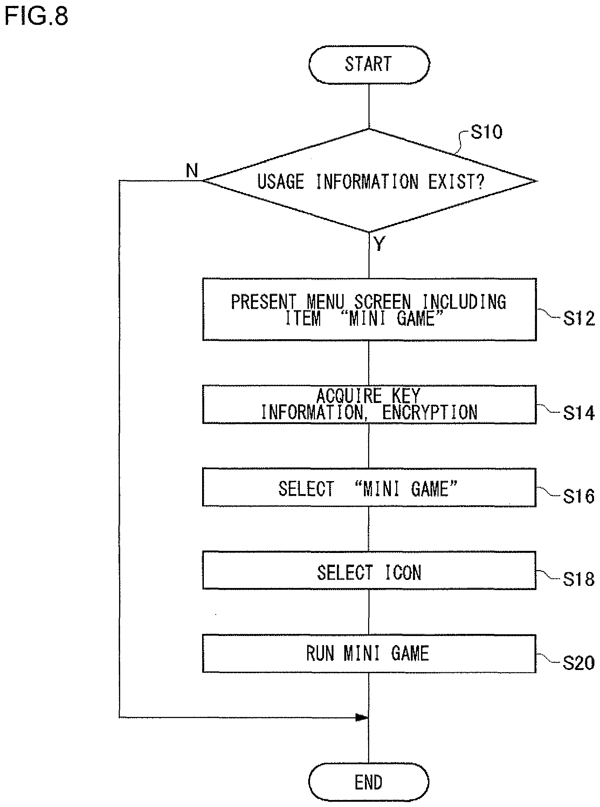

Fig. 8 shows a flowchart indicating a process for executing a mini game. If a predetermined manipulation is made on a button by a user during the execution of the main game, the memory management unit 138 specifies a game image file storage unit 160 on the basis of the title ID specifying the program of the main game that is being executed, and checks the existence of usage information 166 (S10). If usage information 166 exists (Y in S10), the memory management unit 138 acquires the usage information 166 and provides the UI providing unit 136 therewith. The UI providing unit 136 refers to the usage information 166 and presents information relating to an available peripheral device to the user so that the user can select a device (S12). If usage information 166 does not exist (N in S10), the mini game cannot be executed. As described above, the usage information 166 may be information for specifying whether or not to allow the use. In this case, the UI providing unit 136 may check the presence or absence of an available device on the basis of the usage information 166.

In this process, the memory management unit 138 acquires the key information 168 of the mini game program and decrypts the mini game program (S14). Referring to Fig. 5, the user moves the selection box 202 on the "mini game" and pushes the determination button (S16), and the UI providing unit 136 presents the operation screen image shown in Fig. 6, accordingly. If the user selects one of the icon images 200a-200c on this screen image (S18), the second activator 128 activates the second emulator program 154, and the mini game execution unit 134 reads the decrypted mini game program, and executes the mini game, accordingly (S20).

Given above is an explanation based on the exemplary embodiment. The exemplary embodiment is intended to be illustrative only and it will be obvious to those skilled in the art that various modifications to constituting elements and processes could be developed and that such modifications are also within the scope of the present invention.

According to the exemplary embodiment, the explanation is given in case that the information processing device 10 is an emulation device that executes a game program dedicated to a predetermined game device. The present invention can be applied not only to an information processing device that executes a game program but also to an information processing device that processes content data including another application program or the like. According to the exemplary embodiment, a game program is taken as an example of an application program. However, the present invention can be also applied to a program for creating documents or the like in a similar manner.

### [DESCRIPTION OF THE REFERENCE NUMERALS]

1···communication system, 10···information processing device, 20··· emulator program providing server, 30···game image file providing server, 40···display unit, 42···audio output unit, 44···controller unit, 110···acquiring unit, 112···emulator program acquiring unit, 114···game image file acquiring unit, 120···processing unit, 122···input operation receiving unit, 124···emulator activator, 126···first activator, 128··· second activator, 130···execution unit, 132···main game execution unit, 134···mini game execution unit, 136···UI providing unit, 138···memory management unit, 150···emulator program storage unit, 160···game image file storage unit, 170···save data storage unit, and 180···storage unit.

### [INDUSTRIAL APPLICABILITY]

The present invention can be applied to a technical field of information processing.

## Claims

1. An information processing device (10) comprising:
a storage unit (180) operative to store an image file including an application program (162) that is executed in an environment based on a first emulator program (152) provided by a first emulator; and
a processing unit (120) operative to execute the application program in the environment based on the first emulator program provided by the first emulator, wherein the image file includes:
a device-dedicated program (164) that is to be executed in an environment based on a second emulator program (154) provided by a second emulator to emulate execution by a real device or a virtual device, wherein the real or virtual device is a portable game device;
key information (168) for encrypting or decrypting the device-dedicated program; and
usage information (166) which indicates, when the application program is executed, one or more real or virtual devices that are available for emulation based on the second emulator program, and wherein
the processing unit includes:
a UI providing unit (136) operable to refer to the usage information and present information relating to the one or more real or virtual devices available for emulation to a user of the information processing device; and
a memory management unit (138) operable to manage the storage unit, wherein
the memory management unit stores the device-dedicated program in an encrypted state in the storage unit.

2. The information processing device according to claim 1, wherein the processing unit further comprises:
an execution unit (130) operative to execute the application program; and
a providing unit (136) operative to provide a user interface;
wherein the memory management unit reads out the usage information associated with the application program to be executed by the execution unit from the storage unit, and
wherein the providing unit refers to the read usage information and presents information relating to the available virtual device so that the user can select the device.

3. The information processing device according to claim 1 or 2, wherein the image file includes:
data for allowing the user to visually recognize the existence of the device-dedicated program, and
the memory management unit is operable to encrypt the device-dedicated program by using the key information and to store the device-dedicated program in the storage unit, and wherein the memory management unit does not encrypt the data for allowing the user to visually recognize the existence of the device-dedicated program.

4. The information processing device according to one of claims 1 to 3 further comprising:
a first emulator activator (126) operative to activate the first emulator program for the application program; and
a second emulator activator (128) operative to activate the second emulator program for the device-dedicated program.

5. The information processing device according to claim 4, wherein
the first emulator program provides an execution environment of a game console, and
the second emulator program provides an execution environment of a portable game device that is a peripheral device of the game console.

6. The information processing device according to claim 4 or 5, wherein
the second emulator program monitors the execution status of the device-dedicated program, generates an instruction to stop the execution of the first emulator program if the execution of the device-dedicated program is started, and generates an instruction to start the execution of the first emulator program if the execution of the device-dedicated program is completed.

7. A computer program that allows an information processing device retaining an image file including an application program (162) executed in an environment based on a first emulator program (152) provided by a first emulator in a storage unit (180) to implement:
a first module configured to execute the application program in the environment based on the first emulator program provided by the first emulator;
a second module configured to provide a user interface; and
a third module configured to manage the storage unit, wherein the image file includes:
a device-dedicated program (164) that is to be executed in an environment based on a second emulator program (154) provided by a second emulator to emulate execution by a real device or a virtual device, wherein the real or virtual device is a portable game device;
key information (168) for encrypting or decrypting the device-dedicated program; and
usage information (166) which indicates, when the application program is executed, one or more real or virtual devices that are available for emulation based on the second emulator program,
the second module configured to provide the user interface is configured to refer to the usage information and to present information relating to the one or more real or virtual devices available for emulation so that a user of the information processing device can select an available device, and
the third module configured to manage the storage unit to store the device-dedicated program in an encrypted state in the storage unit.

8. A non-transitory computer-readable recording medium encoded with the program according to claim 7.

## Patentansprüche

1. Informationsverarbeitungsvorrichtung (10), umfassend:
eine Speichereinheit (180), die betreibbar ist, um eine Bilddatei zu speichern, welche ein Anwendungsprogramm (162) enthält, das in einer Umgebung basierend auf einem ersten Emulatorprogramm (152), das von einem ersten Emulator bereitgestellt wird, ausgeführt wird; und
eine Verarbeitungseinheit (120), die betreibbar ist, um das Anwendungsprogramm in der Umgebung basierend auf dem ersten Emulatorprogramm, das von dem ersten Emulator bereitgestellt wird, auszuführen, wobei die Bilddatei enthält:
ein gerätespezifisches Programm (164), das in einer Umgebung basierend auf einem zweiten Emulatorprogramm (154), das von einem zweiten Emulator bereitgestellt wird, ausgeführt werden soll, um die Ausführung durch eine reale Vorrichtung oder eine virtuelle Vorrichtung zu emulieren, wobei die reale oder virtuelle Vorrichtung eine tragbare Spielvorrichtung ist;
Schlüsselinformationen (168) zum Verschlüsseln oder Entschlüsseln des gerätespezifischen Programms; und
Nutzungsinformationen (166), die, wenn das Anwendungsprogramm ausgeführt wird, eine oder mehrere reale oder virtuelle Vorrichtungen anzeigen, die für eine Emulation basierend auf dem zweiten Emulatorprogramm verfügbar sind, und wobei die Verarbeitungseinheit aufweist:
eine UI-Bereitstellungseinheit (136), die betreibbar ist, um die Nutzungsinformationen zu referenzieren und Informationen bezüglich der einen oder der mehreren realen oder virtuellen Vorrichtungen, die für eine Emulation verfügbar sind, einem Benutzer der Informationsverarbeitungsvorrichtung zu präsentieren; und
eine Speicherverwaltungseinheit (138), die betreibbar ist, um die Speichereinheit zu verwalten, wobei die Speicherverwaltungseinheit das gerätespezifische Programm in einem verschlüsselten Zustand in der Speichereinheit speichert.

2. Informationsverarbeitungsvorrichtung gemäß Anspruch 1, wobei die Verarbeitungseinheit ferner umfasst:
eine Ausführungseinheit (130), die betreibbar ist, um das Anwendungsprogramm auszuführen; und
eine Bereitstellungseinheit (136), die betreibbar ist, um eine Benutzerschnittstelle bereitzustellen;
wobei die Speicherverwaltungseinheit die Nutzungsinformationen, die mit dem von der Ausführungseinheit auszuführenden Anwendungsprogramm verknüpft sind, aus der Speichereinheit ausliest, und
wobei sich die Bereitstellungseinheit auf die gelesenen Nutzungsinformationen bezieht und Informationen bezüglich der verfügbaren virtuellen Vorrichtung präsentiert, so dass der Benutzer die Vorrichtung auswählen kann.

3. Informationsverarbeitungsvorrichtung gemäß Anspruch 1 oder 2, wobei die Bilddatei beinhaltet:
Daten, um dem Benutzer zu ermöglichen, das Vorhandensein des gerätespezifischen Programms visuell zu erkennen, und
wobei die Speicherverwaltungseinheit betreibbar ist, um das gerätespezifische Programm unter Verwendung der Schlüsselinformationen zu verschlüsseln und das gerätespezifische Programm in der Speichereinheit zu speichern, und wobei die Speicherverwaltungseinheit die Daten nicht verschlüsselt, um dem Benutzer zu ermöglichen, das Vorhandensein des gerätespezifischen Programms visuell zu erkennen.

4. Informationsverarbeitungsvorrichtung gemäß einem der Ansprüche 1 bis 3, ferner umfassend:
einen ersten Emulator-Aktivator (126), der betreibbar ist, um das erste Emulatorprogramm für das Anwendungsprogramm zu aktivieren; und
einen zweiten Emulator-Aktivator (128), der betreibbar ist, um das zweite Emulatorprogramm für das gerätespezifische Programm zu aktivieren.

5. Informationsverarbeitungsvorrichtung gemäß Anspruch 4, wobei
das erste Emulatorprogramm eine Ausführungsumgebung einer Spielkonsole bereitstellt, und
das zweite Emulatorprogramm eine Ausführungsumgebung einer tragbaren Spielvorrichtung, die ein Peripheriegerät der Spielkonsole ist, bereitstellt.

6. Informationsverarbeitungsvorrichtung gemäß Anspruch 4 oder 5, wobei
das zweite Emulatorprogramm den Ausführungsstatus des gerätespezifischen Programms überwacht, eine Anweisung zum Anhalten der Ausführung des ersten Emulatorprogramms erzeugt, wenn die Ausführung des gerätespezifischen Programms gestartet wird, und eine Anweisung zum Starten der Ausführung des ersten Emulatorprogramms erzeugt, wenn die Ausführung des gerätespezifischen Programms abgeschlossen ist.

7. Computerprogramm, das es einer Informationsverarbeitungsvorrichtung ermöglicht, eine Bilddatei zu speichern, die ein Anwendungsprogramm (162) enthält, das in einer Umgebung basierend auf einem ersten Emulatorprogramm (152), das von einem ersten Emulator in einer Speichereinheit (180) bereitgestellt wird, ausgeführt wird, um Folgendes zu implementieren:
ein erstes Modul, das dafür ausgelegt ist, das Anwendungsprogramm in der Umgebung basierend auf dem ersten Emulatorprogramm, das von dem ersten Emulator bereitgestellt wird, auszuführen;
ein zweites Modul, das dafür ausgelegt ist, eine Benutzerschnittstelle bereitzustellen; und
ein drittes Modul, das dafür ausgelegt ist, die Speichereinheit zu verwalten, wobei die Bilddatei enthält:
ein gerätespezifisches Programm (164), das in einer Umgebung basierend auf einem zweiten Emulatorprogramm (154), das von einem zweiten Emulator bereitgestellt wird, ausgeführt werden soll, um die Ausführung durch eine reale Vorrichtung oder eine virtuelle Vorrichtung zu emulieren, wobei die reale oder virtuelle Vorrichtung eine tragbare Spielvorrichtung ist;
Schlüsselinformationen (168) zum Verschlüsseln oder Entschlüsseln des gerätespezifischen Programms; und
Nutzungsinformationen (166), die, wenn das Anwendungsprogramm ausgeführt wird, eine oder mehrere reale oder virtuelle Vorrichtungen anzeigen, die für eine Emulation basierend auf dem zweiten Emulatorprogramm verfügbar sind,
wobei das zweite Modul, das dafür ausgelegt ist, die Benutzerschnittstelle bereitzustellen, dafür ausgelegt ist, die Nutzungsinformationen zu referenzieren und Informationen bezüglich der einen oder der mehreren realen oder virtuellen Vorrichtungen, die für eine Emulation verfügbar sind, zu präsentieren, so dass der Benutzer der Informationsverarbeitungsvorrichtung eine verfügbare Vorrichtung auswählen kann, und
wobei das dritte Modul dafür ausgelegt ist, die Speichereinheit zu verwalten, um das gerätespezifische Programm in einem verschlüsselten Zustand in der Speichereinheit zu speichern.

8. Nichtflüchtiges, computerlesbares Aufzeichnungsmedium, das mit dem Programm gemäß Anspruch 7 codiert ist.

## Revendications

1. Dispositif de traitement d'informations (10) comprenant :
une unité de stockage (180) fonctionnant pour stocker un fichier d'image comprenant un programme d'application (162) qui est exécuté dans un environnement sur la base d'un premier programme d'émulation (152) fourni par un premier émulateur ; et
une unité de traitement (120) fonctionnant pour exécuter le programme d'application dans l'environnement sur la base du premier programme d'émulation fourni par le premier émulateur, le fichier d'image comprenant :
un programme dédié à un dispositif (164) à exécuter dans un environnement sur la base d'un second programme d'émulation (154) fourni par un second émulateur pour émuler l'exécution par un dispositif réel ou un dispositif virtuel, le dispositif réel ou virtuel étant un dispositif de jeu portable ;
des informations de clé (168) pour le cryptage ou le décryptage du programme dédié à un dispositif ; et
des informations d'utilisation (166) qui indiquent, lorsque le programme d'application est exécuté, un ou plusieurs dispositifs réels ou virtuels qui sont disponibles pour une émulation basée sur le deuxième programme d'émulation, et
l'unité de traitement comprenant :
une unité de fourniture UI (136) utilisable pour se référer aux informations d'utilisation et présenter les informations relatives au ou aux dispositifs réels ou virtuels disponibles pour l'émulation à un utilisateur du dispositif de traitement d'informations ; et
une unité de gestion de la mémoire (138) utilisable pour gérer l'unité de stockage, l'unité de gestion de la mémoire stockant le programme dédié à un dispositif dans un état crypté dans l'unité de stockage.

2. Dispositif de traitement d'informations selon la revendication 1, l'unité de traitement comprenant en outre :
une unité d'exécution (130) fonctionnant pour exécuter le programme d'application ; et
une unité de fourniture (136) fonctionnant pour fournir une interface utilisateur ;
l'unité de gestion de la mémoire lisant les informations d'utilisation associées au programme d'application à exécuter par l'unité d'exécution à partir de l'unité de stockage, et
l'unité de fourniture se référant aux informations d'utilisation lues et présentant les informations relatives au dispositif virtuel disponible afin que l'utilisateur puisse sélectionner le dispositif.

3. Dispositif de traitement d'informations selon la revendication 1 ou 2, le fichier d'image comprenant :
des données permettant à l'utilisateur de reconnaître visuellement l'existence du programme dédié à un dispositif, et
l'unité de gestion de la mémoire étant utilisable pour crypter le programme dédié à un dispositif en utilisant les informations de la clé et pour stocker le programme dédié à un dispositif dans l'unité de stockage, et l'unité de gestion de la mémoire ne cryptant pas les données pour permettre à l'utilisateur de reconnaître visuellement l'existence du programme dédié à un dispositif.

4. Dispositif de traitement d'informations selon l'une des revendications 1 à 3 comprenant en outre :
un premier activateur d'émulateur (126) fonctionnant pour activer le premier programme d'émulation pour le programme d'application ; et
un deuxième activateur d'émulateur (128) fonctionnant pour activer le deuxième programme d'émulation pour le programme dédié à un dispositif.

5. Dispositif de traitement d'informations selon la revendication 4,
le premier programme d'émulation fournissant un environnement d'exécution d'une console de jeu, et
le second programme d'émulation fournissant un environnement d'exécution d'un dispositif de jeu portable qui est un périphérique de la console de jeu.

6. Dispositif de traitement d'informations selon la revendication 4 ou 5,
le second programme d'émulation surveillant l'état d'exécution du programme dédié à un dispositif, générant une instruction pour arrêter l'exécution du premier programme d'émulation si l'exécution du programme dédié à un dispositif est lancée, et générant une instruction pour lancer l'exécution du premier programme d'émulation si l'exécution du programme dédié à un dispositif est terminée.

7. Programme informatique qui permet à un dispositif de traitement d'informations conservant un fichier d'image comprenant un programme d'application (162) exécuté dans un environnement sur la base d'un premier programme d'émulation (152) fourni par un premier émulateur dans une unité de stockage (180) de mettre en œuvre :
un premier module configuré pour exécuter le programme d'application dans l'environnement sur la base du premier programme d'émulation fourni par le premier émulateur ;
un deuxième module configuré pour fournir une interface utilisateur ; et
un troisième module configuré pour gérer l'unité de stockage, le fichier d'image comprenant :
un programme dédié à un dispositif (164) à exécuter dans un environnement sur la base d'un deuxième programme d'émulation (154) fourni par un deuxième émulateur pour émuler l'exécution par un dispositif réel ou un dispositif virtuel, le dispositif réel ou virtuel étant un dispositif de jeu portable ;
des informations de clé (168) pour le cryptage ou le décryptage du programme dédié à un dispositif ; et
des informations d'utilisation (166) qui indiquent, lorsque le programme d'application est exécuté, un ou plusieurs dispositifs réels ou virtuels qui sont disponibles pour l'émulation sur la base du deuxième programme d'émulation,
le deuxième module configuré pour fournir l'interface utilisateur, étant configuré pour se référer aux informations d'utilisation et pour présenter les informations relatives au ou aux dispositifs réels ou virtuels disponibles pour l'émulation afin qu'un utilisateur du dispositif de traitement d'informations puisse sélectionner un dispositif disponible, et
le troisième module configuré pour gérer l'unité de stockage pour stocker le programme dédié à un dispositif dans un état crypté dans l'unité de stockage.

8. Support d'enregistrement non transitoire lisible par ordinateur codé avec le programme selon la revendication 7.
